(19) Europäisches Patentamt
European Patent Office
Office européen des brevets

(11) **EP 4 239 418 A1**

(12) **EUROPEAN PATENT APPLICATION**
published in accordance with Art. 153(4) EPC

(43) Date of publication:
06.09.2023 Bulletin 2023/36

(51) International Patent Classification (IPC):
*G05B 11/36* (2006.01)    *G05B 13/02* (2006.01)
*B63B 79/40* (2020.01)    *B63H 25/04* (2006.01)
*B63H 25/30* (2006.01)

(21) Application number: 21900632.7

(22) Date of filing: 01.12.2021

(52) Cooperative Patent Classification (CPC):
**B63B 79/40; B63H 25/04; B63H 25/30;**
**G05B 11/36; G05B 13/02**

(86) International application number:
**PCT/JP2021/044086**

(87) International publication number:
**WO 2022/118881 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 03.12.2020 JP 2020200968

(71) Applicant: **NHK Spring Co., Ltd.**
**Yokohama-shi, Kanagawa 236-0004 (JP)**

(72) Inventors:
• **SHIRAO Masato**
**Yokohama-shi, Kanagawa 236-0004 (JP)**
• **AKITA Marino**
**Yokohama-shi, Kanagawa 236-0004 (JP)**
• **KAMIYA Takafumi**
**Yokohama-shi, Kanagawa 236-0004 (JP)**

(74) Representative: **V.O.**
**P.O. Box 87930**
**2508 DH Den Haag (NL)**

(54) **MARINE VESSEL, HEADING CONTROL METHOD, HEADING CONTROL DEVICE, AND PROGRAM**

(57) A marine vessel includes: an actuator having a rudder; a heading detection unit configured to detect an actual heading of the marine vessel; and a heading control device including a target heading acquisition unit, a heading deviation calculation unit, a PID control unit, and a gain setting unit, the heading deviation calculation unit calculates a heading deviation, which is the difference between a target heading and the actual heading, the PID control unit calculates an instruction value for the actuator through PID control from the heading deviation calculated by the heading deviation calculation unit, the gain setting unit sets, out of a proportional gain, an integral gain, and a derivative gain used in the PID control, at least the derivative gain, and in a case in which the heading deviation calculated by the heading deviation calculation unit is equal to or greater than a first threshold value, the gain setting unit adds a derivative gain addition correction quantity to the current value of the derivative gain.

FIG. 1

EP 4 239 418 A1

**Description**

[Technical Field]

The present invention relates to a marine vessel, a heading control method, a heading control device, and a program.
Priority is claimed on Japanese Patent Application No. 2020-200968, filed December 3, 2020, the content of which is incorporated herein by reference.

[Background Art]

Automatic steering devices have been known since the past (see Patent Document 1, for example). In the technique described in Patent Document 1, PID (proportional-integral-derivative) control is applied to an automatic steering device. Patent Document 1 describes a proportional action, a proportional gain, an integral action, an integral gain, a derivative action, and a derivative gain. In addition, Patent Document 1 states that, when an output (an actual heading of a marine vessel) changes suddenly due to a change in a surrounding environment resulting from a sudden change in weather or the like, a derivative action of changing an input value (a rudder angle instruction value) in proportion to a derivative of a deviation between a target heading and the actual heading (that is, making a derivative gain greater than zero) is performed.
Patent Document 2 describes an automatic steering device of a marine vessel that can switch between manual steering and automatic steering. In the technique described in Patent Document 2, control is performed such that the automatic steering device does not always operate.
Patent Document 3 describes a heading holding means for generating a rudder command signal when a heading error signal (a deviation between a target heading and an actual heading) is equal to or less than a predetermined threshold value, and a heading changing means for generating a rudder command signal when the heading error signal exceeds the predetermined threshold value. In addition, Patent Document 3 describes an automatic steering device, a proportional gain control circuit, an integration circuit, and a differential circuit. In the technique described in Patent Document 3, the heading error signal is differentiated, and the differentiated signal is combined with a proportional signal to prevent overshoot.
"7·11 Automatic Steering Device (Heading·Control System)" 2003 Technical course on electric ship equipment for communication training (Radar, AIS·VDR·GPS edition) Technical guidance on electric ship equipment, etc., The Ship's Electric Installation Contractors' Association of Japan, The Nippon Foundation Library https://nippon.zaidan.info/seikabutsu/2003/0013 9/ contents/0050 .htm
As described on the above site, in the known automatic steering device, a derivative rudder (a derivative value of a deviation between a target heading and an actual heading multiplied by a derivative gain) was used for a brake that restrains movement of a ship. That is, in the known automatic steering device, when it was necessary to apply the brake that restrains the movement of the ship, the derivative gain was set to a value greater than zero, and when there was no need to apply the brake that restrains the movement of the ship, the derivative gain was basically set to zero.

[Citation List]

[Patent Document]

[Patent Document 1]
Japanese Unexamined Patent Application, First Publication No. 2008-230484
[Patent Document 2]
Japanese Patent No. 5400506
[Patent Document 3]
Japanese Examined Patent Application, Second Publication No. S63-47679

[Summary of Invention]

[Technical Problem]

As described above, Patent Document 1 states that the derivative gain is made larger than zero (more specifically, the derivative gain is increased from zero) in a case in which the actual heading suddenly changes.

However, the present inventors and the like have found through their intensive research that, not in the case in which the actual heading changes suddenly, but in a case in which the deviation between the target heading and the actual heading is equal to or greater than a predetermined threshold value (specifically, in a case in which a state in which a target heading angle is greater than an actual heading angle by a predetermined threshold value or more and a state in which the actual heading angle is greater than the target heading angle by a predetermined threshold value or more are alternately repeated), the deviation between the target heading and the actual heading can be inhibited below the predetermined threshold value by adding a derivative gain addition correction quantity to the current value of a derivative gain.

That is, with the technique described in Patent Document 1 in which the derivative gain addition correction quantity is not added to the current value of the derivative gain in the case in which the deviation between the target heading and the actual heading is equal to or greater than the predetermined threshold value, the deviation between the target heading and the actual heading cannot be appropriately controlled through PID control.

As described above, Patent Document 2 describes a technique for preventing the automatic steering device from always operating.

However, Patent Document 2 does not describe PID control. For that reason, with the technique described in Patent Document 2, the deviation between the target heading and the actual heading cannot be appropriately controlled through PID control.

As described above, Patent Document 3 describes a technique in which the signal obtained by differentiating the heading error signal (the deviation between the target heading and the actual heading) is used to prevent overshoot of the deviation.

However, Patent Document 3 does not describe whether to add the derivative gain addition correction quantity to the current value of the derivative gain or subtract the derivative gain reduction correction quantity from the current value of the derivative gain in order to prevent overshoot of the deviation. For that reason, with the technique described in Patent Document 3, the deviation between the target heading and the actual heading cannot be appropriately controlled through PID control.

As described above, in the known automatic steering device, the derivative gain was basically set to zero when there was no need to apply the brake that restrained the movement of the ship.

However, as described above, the present inventors and the like have found that, in the case in which the deviation between the target heading and the actual heading is equal to or greater than a predetermined threshold value (that is, when it is necessary to move the ship in order to reduce the deviation between the target heading and the actual heading, that is, when there is no need to apply the brake that restrains the movement of the ship), the deviation between the target heading and the actual heading can be inhibited below the predetermined threshold value by adding the derivative gain addition correction quantity to the current value of the derivative gain.

That is, with the known automatic steering device in which the derivative gain addition correction quantity is not added to the current value of the derivative gain in the case in which the deviation between the target heading and the actual heading is equal to or greater than the predetermined threshold value (that is, when there is no need to apply the brake that restrains the movement of the ship), the deviation between the target heading and the actual heading cannot be appropriately controlled through PID control.

In addition, the present inventors and the like have found through their intensive research that, for example, an instruction value such as a steering angle instruction value calculated through PID control may change significantly due to influence of disturbances or the like received by a marine vessel.

When the instruction value calculated through the PID control changes significantly, it may be difficult to match the actual heading of the ship with the target heading and maintain it stably. Accordingly, it is necessary to avoid a large change in the instruction value calculated through the PID control.

The present inventors and the like have found through their intensive research that, by subtracting a derivative gain reduction correction quantity from the current value of the derivative gain in the case in which an evaluation value of a change quantity in the instruction value is equal to or greater than a predetermined threshold value (that is, when the change quantity in the instruction value needs to be inhibited), the change quantity in the instruction value can be inhibited.

That is, in the known automatic steering device in which the derivative gain reduction correction quantity is not subtracted from the current value of the derivative gain in the case in which the evaluation value of the change quantity in the instruction value is equal to or greater than a predetermined threshold value (that is, when the change quantity in the instruction value needs to be inhibited), the change quantity in the instruction value cannot be appropriately controlled through the PID control.

In view of the above-described problems, an object of the present invention is to provide a marine vessel, a heading control method, a heading control device, and a program in which a deviation between a target heading and an actual heading can be appropriately controlled through PID control.

In addition, another object of the present invention is to provide a marine vessel, a heading control method, a heading control device, and a program in which a change quantity in an instruction value can be appropriately controlled through PID control.

[Solution to Problem]

One aspect of the present invention is a marine vessel including: an actuator having a rudder; a heading detection unit configured to detect an actual heading, which is an actual azimuth of a bow of the marine vessel; and a heading control device including a target heading acquisition unit, a heading deviation calculation unit, a PID control unit, and a gain setting unit, wherein the heading deviation calculation unit calculates a heading deviation, which is the difference between a target heading acquired by the target heading acquisition unit and the actual heading detected by the heading detection unit, the PID control unit calculates an instruction value for the actuator through PID control from the heading deviation calculated by the heading deviation calculation unit, the gain setting unit sets, out of a proportional gain, an integral gain, and a derivative gain used in the PID control, at least the derivative gain, and in a case in which the heading deviation calculated by the heading deviation calculation unit is equal to or greater than a first threshold value, the gain setting unit adds a derivative gain addition correction quantity to the current value of the derivative gain.

One aspect of the present invention is a marine vessel including: an actuator having a rudder; a heading detection unit configured to detect an actual heading, which is an actual azimuth of a bow of the marine vessel; and a heading control device including a target heading acquisition unit, a heading deviation calculation unit, a PID control unit, and a gain setting unit, wherein the heading deviation calculation unit calculates a heading deviation, which is the difference between a target heading acquired by the target heading acquisition unit and the actual heading detected by the heading detection unit, the PID control unit calculates an instruction value for the actuator through PID control from the heading deviation calculated by the heading deviation calculation unit, the gain setting unit sets, out of a proportional gain, an integral gain, and a derivative gain used for the PID control, at least the derivative gain, and in a case in which an evaluation value of a change quantity in the instruction value calculated by the PID control unit is equal to or greater than a second threshold value, the gain setting unit subtracts a derivative gain reduction correction quantity from the current value of the derivative gain.

One aspect of the present invention is a heading control method for a marine vessel including an actuator having a rudder, including: a heading detection step of detecting an actual heading, which is an actual azimuth of a bow of the marine vessel; a target heading acquisition step of acquiring a target heading; a heading deviation calculation step of calculating a heading deviation, which is the difference between the target heading acquired in the target heading acquisition step and the actual heading detected in the heading detection step; a PID control step of calculating an instruction value for the actuator through PID control from the heading deviation calculated in the heading deviation calculation step; and a gain setting step of setting, out of a proportional gain, an integral gain, and a derivative gain used in the PID control step, at least the derivative gain, wherein, in a case in which the heading deviation calculated in the heading deviation calculation step is equal to or greater than a first threshold value, a derivative gain addition correction quantity is added to the current value of the derivative gain in the gain setting step.

One aspect of the present invention is a heading control method for a marine vessel including an actuator having a rudder, including: a heading detection step of detecting an actual heading, which is an actual azimuth of a bow of the marine vessel; a target heading acquisition step of acquiring a target heading; a heading deviation calculation step of calculating a heading deviation, which is the difference between the target heading acquired in the target heading acquisition step and the actual heading detected in the heading detection step; a PID control step of calculating an instruction value for the actuator through PID control from the heading deviation calculated in the heading deviation calculation step; and a gain setting step of setting, out of a proportional gain, an integral gain, and a derivative gain used in the PID control step, at least the derivative gain, wherein, in a case in which an evaluation value of a change quantity in the instruction value calculated in the PID control step is equal to or greater than a second threshold value, a derivative gain reduction correction quantity is subtracted from the current value of the derivative gain in the gain setting step.

One aspect of the present invention is a heading control device for a marine vessel including an actuator having a rudder, including: a target heading acquisition unit; a heading deviation calculation unit configured to calculate a heading deviation, which is the difference between a target heading acquired by the target heading acquisition unit and an actual heading; a PID control unit configured to calculate an instruction value for the actuator through PID control from the heading deviation calculated by the heading deviation calculation unit; and a gain setting unit configured to set, out of a proportional gain, an integral gain, and a derivative gain used for the PID control, at least the derivative gain, wherein, in a case in which the heading deviation calculated by the heading deviation calculation unit is equal to or greater than a first threshold value, the gain setting unit adds a derivative gain addition correction quantity to the current value of the derivative gain.

One aspect of the present invention is a heading control device for a marine vessel including an actuator having a rudder, including: a target heading acquisition unit; a heading deviation calculation unit configured to calculate a heading deviation, which is the difference between a target heading acquired by the target heading acquisition unit and an actual heading; a PID control unit configured to calculate an instruction value for the actuator through PID control from the heading deviation calculated by the heading deviation calculation unit; and a gain setting unit configured to set, out of a proportional gain, an integral gain, and a derivative gain used for the PID control, at least the derivative gain, wherein, in a case in which an evaluation value of a change quantity in the instruction value calculated by the PID control unit is equal to or greater than a second threshold value, the gain setting unit subtracts a derivative gain reduction correction quantity from the current value of the derivative gain.

One aspect of the present invention is a non-transitory storage medium storing a program for causing a computer mounted in a marine vessel including an actuator having a rudder to execute: a heading detection step of detecting an actual heading, which is an actual azimuth of a bow of the marine vessel; a target heading acquisition step of acquiring a target heading; a heading deviation calculation step of calculating a heading deviation, which is the difference between the target heading acquired in the target heading acquisition step and the actual heading detected in the heading detection step; a PID control step of calculating an instruction value for the actuator through PID control from the heading deviation calculated in the heading deviation calculation step; and a gain setting step of setting, out of a proportional gain, an integral gain, and a derivative gain used in the PID control step, at least the derivative gain, wherein, in a case in which the heading deviation calculated in the heading deviation calculation step is equal to or greater than a first threshold value, a derivative gain addition correction quantity is added to the current value of the derivative gain in the gain setting step.

One aspect of the present invention is a non-transitory storage medium storing a program for causing a computer mounted in a marine vessel including an actuator having a rudder to execute: a heading detection step of detecting an actual heading, which is an actual azimuth of a bow of the marine vessel; a target heading acquisition step of acquiring a target heading; a heading deviation calculation step of calculating a heading deviation, which is the difference between the target heading acquired in the target heading acquisition step and the actual heading detected in the heading detection step; a PID control step of calculating an instruction value for the actuator through PID control from the heading deviation calculated in the heading deviation calculation step; and a gain setting step of setting, out of a proportional gain, an integral gain, and a derivative gain used in the PID control step, at least the derivative gain, wherein, in a case in which the evaluation value of a change quantity in the instruction value calculated in the PID control step is equal to or greater than a second threshold value, a derivative gain reduction correction quantity is subtracted from the current value of the derivative gain in the gain setting step.

[Advantageous Effects of Invention]

According to the present invention, it is possible to provide the marine vessel, the heading control method, the heading control device, and the program in which the deviation between the target heading and the actual heading can be appropriately controlled through the PID control.

In addition, it is possible to provide the marine vessel, the heading control method, the heading control device, and the program in which the change quantity in the instruction value can be appropriately controlled through the PID control.

[Brief Description of Drawings]

FIG. 1 is a diagram schematically showing an example of a marine vessel according to a first embodiment.
FIG. 2 is a diagram showing an example of a flow of data or the like in the marine vessel according to the first embodiment.
FIG. 3 is a diagram showing a part of research results of the present inventors and the like.
FIG. 4 is a diagram showing another part of the research results of the present inventors and the like.
FIG. 5 is a flowchart showing an example of processing executed in the marine vessel according to the first embodiment.
FIG. 6 is a flowchart showing an example of processing executed in step S18 shown in FIG. 5.

[Description of Embodiments]

<First embodiment>

First embodiments of a marine vessel, a heading control method, a heading control device, and a program according to the present invention will be described below.

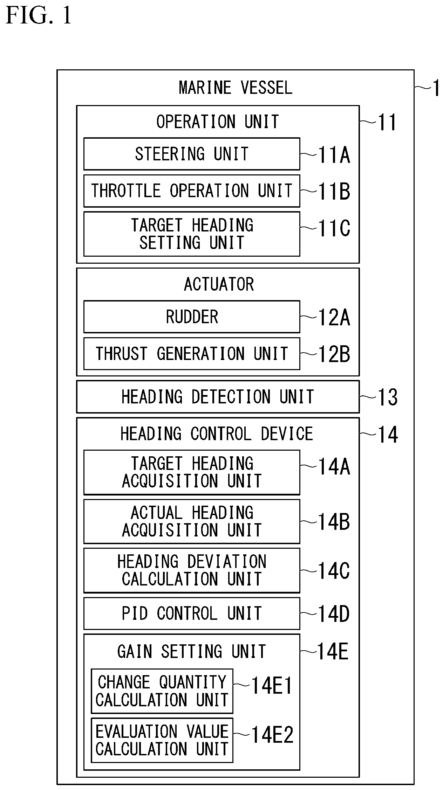

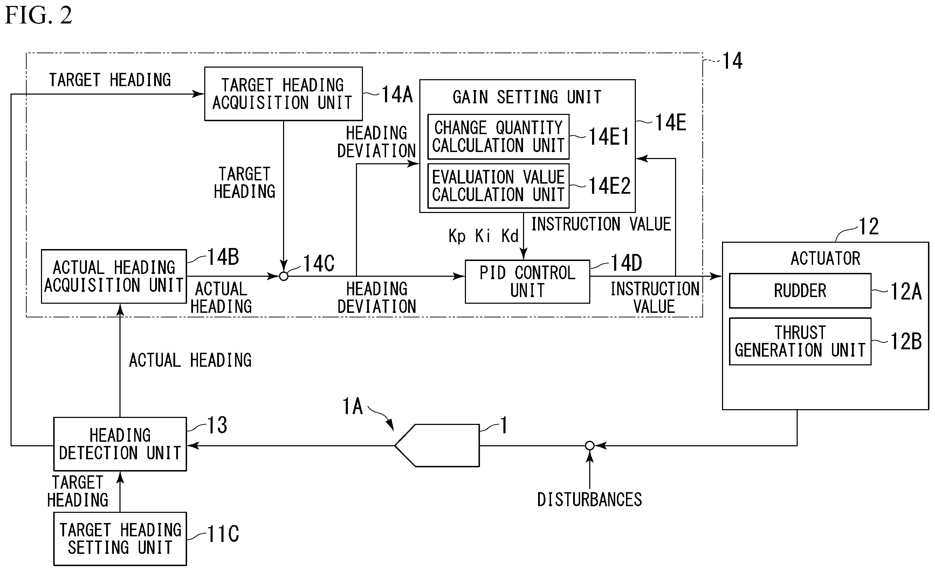

FIG. 1 is a diagram schematically showing an example of a marine vessel 1 of the first embodiment. FIG. 2 is a diagram showing an example of a flow of data or the like in the marine vessel 1 of the first embodiment.

In the example shown in FIGS. 1 and 2, the marine vessel 1 of the first embodiment is a marine vessel such as a water motorcycle (a personal watercraft (PWC)) described in FIG. 1 of Japanese Patent No. 5196649, for example. The marine vessel 1 includes an operation unit 11, an actuator 12, a heading detection unit 13, and a heading control device 14.

The operation unit 11 includes, for example, a steering unit 11A, a throttle operation unit 11B, and a target heading setting unit 11C. The steering unit 11A receives an input operation of a vessel operator who operates a rudder 12A, which will be described later. The throttle operation unit 11B receives an input operation of the vessel operator who operates a thrust generation unit 12B, which will be described later. The target heading setting unit 11C sets a target heading, which is an azimuth of a target of a bow 1A of the marine vessel 1 (see FIG. 2). The target heading setting unit 11C sets the target heading of the marine vessel 1 in response to an input operation of the vessel operator (for example, an operation of turning on a switch (not shown) or the like).

The actuator 12 includes the rudder 12A and the thrust generation unit 12B. The rudder 12A has a function of generating a turning moment in the marine vessel 1. The thrust generation unit 12B has a function of generating a propulsive force of the marine vessel 1.

The heading detection unit 13 detects an actual heading, which is an actual azimuth of the bow 1A of the marine vessel 1. The heading detection unit 13 includes, for example, an azimuth sensor. The azimuth sensor calculates the actual heading of the marine vessel 1 by utilizing geomagnetism, for example.

In another example, the azimuth sensor may be a device (gyrocompass) that always indicates north by adding a north pointing device and a damping device to a gyroscope rotating at high speed.

In still another example, the azimuth sensor may be a Global Positioning System (GPS) compass that includes a plurality of GPS antennas and calculates a heading from relative positional relationships between the plurality of GPS antennas.

In the example shown in FIGS. 1 and 2, the heading control device 14 includes a target heading acquisition unit 14A, an actual heading acquisition unit 14B, a heading deviation calculation unit 14C, a PID control unit 14D, and a gain setting unit 14E.

For example, as shown in FIG. 2, the target heading acquisition unit 14A acquires, as the target heading, the actual heading detected by the heading detection unit 13 at the timing when the target heading setting unit 11C sets the target heading of the marine vessel 1 in response to the input operation of the vessel operator.

In another example, the target heading acquisition unit 14A may acquire, as the target heading, a heading angle or the like numerically input by the vessel operator, for example.

In the example shown in FIGS. 1 and 2, the actual heading acquisition unit 14B acquires, for example, the actual heading at the current time detected by the heading detection unit 13 as the actual heading used for control performed by the heading control device 14.

The heading deviation calculation unit 14C calculates a heading deviation, which is the difference between the target heading acquired by the target heading acquisition unit 14A and the actual heading detected by the heading detection unit 13 (specifically, the actual heading acquired by the actual heading acquisition unit 14B).

The PID control unit 14D calculates an instruction value STR for the actuator 12 through PID control from the heading deviation calculated by the heading deviation calculation unit 14C. Specifically, the PID control unit 14D calculates the instruction value STR at a predetermined time interval. Specifically, the PID control unit 14D calculates the instruction value STR on the basis of, for example, the following formula. In the following formula, Kp indicates a proportional gain, Ki indicates an integral gain, and Kd indicates a derivative gain.

$$STR = Kp \times \text{heading deviation} + Ki \times \text{integral value of heading deviation} + Kd$$
$$\times \text{derivative value of heading deviation}$$

In the example shown in FIGS. 1 and 2, the gain setting unit 14E sets the proportional gain Kp, the integral gain Ki, and the derivative gain Kd used for the PID control on the basis of the heading deviation calculated by the heading deviation calculation unit 14C and the instruction value STR calculated by the PID control unit 14D.

In another example, the gain setting unit 14E may only set the derivative gain Kd, and the proportional gain Kp and the integral gain Ki may be set, for example, by the vessel operator, or may be set to fixed values.

In the example shown in FIGS. 1 and 2, the gain setting unit 14E includes a change quantity calculation unit 14E1 and an evaluation value calculation unit 14E2. As described above, the PID control unit 14D calculates the instruction value STR at a predetermined time interval.

The change quantity calculation unit 14E1 calculates, for example, a change quantity $|STR_t - STR_{t-1}|$ of the instruction value STR, which is the difference an instruction value $STR_t$ calculated by the PID control unit 14D at a time t and an instruction value $STR_{t-1}$ calculated by the PID control unit 14D at a time a predetermined time before the time t (that is, a time (t-1)). That is, the change quantity $|STR_t-STR_{t-1}|$ of the instruction value STR calculated by the change quantity calculation unit 14E1 of the PID control unit 14D is the difference between the instruction value $STR_t$ calculated at that time by the PID control unit 14D and the instruction value $STR_{t-1}$ previously calculated by the PID control unit 14D.

The evaluation value calculation unit 14E2 calculates an evaluation value $E_t$ of the change quantity $|STR_t-STR_{t-1}|$ of the instruction value STR calculated by the change quantity calculation unit 14E1. Specifically, the evaluation value calculation unit 14E2 calculates the evaluation value $E_t$ of the change quantity of the instruction value STR on the basis of the following formula.

[Formula 1]

$$E_t = \frac{1}{n+1} \sum_{k=0}^{n} |STR_{t-k} - STR_{t-k-1}|$$

That is, the evaluation value $E_t$ of the change quantity of the instruction value STR represented by the above formula is a value corresponding to a value obtained by accumulating the change quantity $|STR_{t-k}-STR_{t-k-1}|$ of the instruction value STR calculated by the PID control unit 14D from a current time (k=0) back to a preset time (k=n).

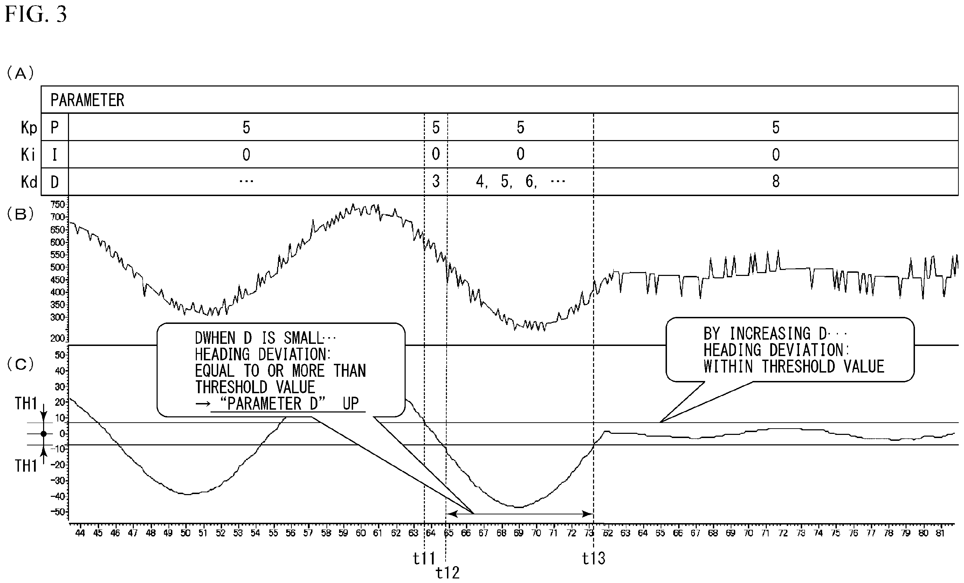

FIG. 3 is a diagram showing a part of research results of the present inventors and the like. In other words, FIG. 3 is a diagram showing examples of a time waveform of the heading deviation calculated by the heading deviation calculation unit 14C of the heading control device 14 of the marine vessel 1 according to the first embodiment, a time waveform of the instruction value STR calculated by the PID control unit 14D, and the like. Specifically, FIG. 3(A) shows the proportional gain Kp, the integral gain Ki, and the derivative gain Kd during the period indicated by the horizontal axis in FIG. 3 by "P," "I," and "D." FIG. 3(B) shows the time waveform of the instruction value STR calculated by the PID control unit 14D. FIG. 3(C) shows the time waveform of the heading deviation calculated by the heading deviation calculation unit 14C.

In the example shown in FIG. 3, after a time 111, control by the heading control device 14 of the marine vessel 1 of the first embodiment is performed, and before the time 111, control similar to automatic steering by the above-described known automatic steering device is performed.

Before the time 111, that is, in the case in which the control similar to automatic steering by the above-described known automatic steering device is performed (in a case in which the derivative gain Kd is fixed at zero, for example), the heading deviation (see FIG. 3(C)) becomes larger than a threshold value TH1 (see FIG. 3(C)) due to disturbances by waves, wind, tides, and the like, constant changes in strength of waves, wind, tides, and the like, etc. Specifically, a state in which a target heading angle is larger than the actual heading angle by the threshold value TH1 or more (for example, a state in which the actual heading is directed more leftward than the target heading) and a state in which the actual heading angle is larger than the target heading angle by the threshold value TH1 or more (for example, a state in which the actual heading is directed more rightward than the target heading) are alternately repeated. In addition, in the same control as automatic steering by the known automatic steering device, a product of the proportional gain Kp and the heading deviation (see FIG. 3(C)) is calculated as the instruction value, and thus the time waveform of the instruction value (see FIG. 3(B)) also repeatedly increases and decreases in the same way as the time waveform of the heading deviation (see FIG. 3(C)).

After the time t11, control by the heading control device 14 of the marine vessel 1 of the first embodiment is performed.

Specifically, during the period from the time t11 to a time t12, the heading deviation calculated by the heading deviation calculation unit 14C (see FIG. 3(C)) is less than the threshold value TH1, and thus the gain setting unit 14E maintains a value of the derivative gain Kd at "3" (see FIG. 3(A)) without adding a derivative gain addition correction quantity (for example, "0.01") to the current value of the derivative gain Kd. As a result, the heading deviation (see FIG. 3(C)) calculated by the heading deviation calculation unit 14C tends to transition from a state in which the target heading angle is greater than the actual heading angle by the threshold value TH1 or more (for example, a state in which the actual heading is directed more leftward than the target heading) to a state in which the actual heading angle is greater than the target heading angle by the threshold value TH1 or more (for example, a state in which the actual heading is directed rightward from the target heading).

Next, during the period from the time t12 to a time t13, the heading deviation calculated by the heading deviation calculation unit 14C (see FIG. 3(C)) becomes equal to or greater than the threshold value TH1. Specifically, the actual heading angle is in a state in which it is greater than the target heading angle by the threshold value TH1 or more (for example, a state in which the actual heading is directed more rightward than the target heading).

Thus, in the control by the heading control device 14 of the marine vessel 1 of the first embodiment, the gain setting unit 14E performs a process of adding the derivative gain addition correction quantity to the current value of the derivative gain Kd at a predetermined time interval, for example. As a result, the value of the derivative gain Kd increases from "3" to "8."

Accordingly, in the control by the heading control device 14 of the marine vessel 1 of the first embodiment, during the period after the time t13, the heading deviation calculated by the heading deviation calculation unit 14C (see FIG. 3(C)) can be made less than the threshold value TH1.

Specifically, during the period after the time t13, the heading deviation calculated by the heading deviation calculation unit 14C (see FIG. 3(C)) is less than the threshold value TH1, and thus the gain setting unit 14E maintains the value of the derivative gain Kd at "8" without adding the derivative gain addition correction quantity to the current value of the derivative gain Kd (see FIG. 3(A)).

The present inventors and the like have been able to confirm through their research that, as shown in FIG. 3, the heading deviation (see FIG. 3(C)) can be appropriately controlled by performing control by the heading control device 14 of the marine vessel 1 of the first embodiment.

That is, the present inventors and the like have found that, in the case in which the heading deviation (see FIG. 3(C)) is equal to or greater than the threshold value TH1, the heading deviation can be inhibited below the threshold value TH1 by adding the derivative gain addition correction quantity to the current value of the derivative gain Kd (see FIG. 3(A)).

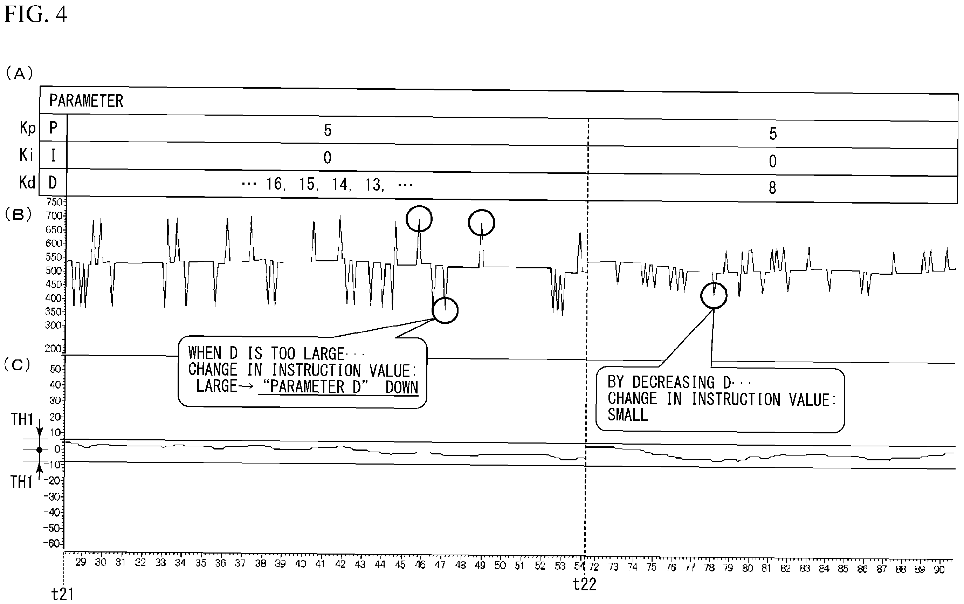

FIG. 4 is a diagram showing another part of the research results of the present inventors. In other words, FIG. 4 is a diagram showing other examples of the time waveform of the heading deviation calculated by the heading deviation calculation unit 14C of the heading control device 14 of the marine vessel 1 of the first embodiment, the time waveform of the instruction value STR calculated by the PID control unit 14D, and the like. Specifically, FIG. 4(A) shows the proportional gain Kp, the integral gain Ki, and the derivative gain Kd during the period indicated by the horizontal axis in FIG. 4 by "P," "I," and "D." FIG. 4(B) shows the time waveform of the instruction value STR calculated by the PID control unit 14D. FIG. 4(C) shows the time waveform of the heading deviation calculated by the heading deviation calculation unit 14C.

In the example shown in FIG. 4, during the period before a time t21, the control by the heading control device 14 of the marine vessel 1 of the first embodiment was performed, and the gain setting unit 14E increased the derivative gain Kd to a value greater than "16," and thus the heading deviation (see FIG. 4(C)) calculated by the heading deviation calculation unit 14C became less than the threshold value TH1.

The present inventors and the like have confirmed through their intensive research that the instruction value STR (see FIG. 4(B)) calculated by the PID control unit 14D may change significantly due to influence of disturbances received by the marine vessel 1, as during the period from the time t21 to a time t22.

Further, the present inventors and the like have found through their intensive research that, by executing the process of subtracting the derivative gain reduction correction quantity (for example, "0.1") from the current value of the derivative gain Kd (see FIG. 4(A)) as during the period from the time t21 to the time t22, it is possible to inhibit a large change in the instruction value STR (see FIG. 4(B)) calculated by the PID control unit 14D.

Thus, in the control by the heading control device 14 of the marine vessel 1 of the first embodiment, in a case in which the evaluation value $E_t$ of the change quantity in the instruction value STR (see FIG. 4(B)) calculated by the PID control unit 14D is equal to or greater than a threshold value TH2, the gain setting unit 14E performs a process of subtracting the derivative gain reduction correction quantity from the current value of the derivative gain Kd.

In the example shown in FIG. 4, at the time t21, the evaluation value $E_t$ of the change quantity in the instruction value STR (see FIG. 4(B)) calculated by the PID control unit 14D is equal to or greater than the threshold value TH2. For that reason, until the evaluation value $E_t$ of the change quantity in the instruction value STR (see FIG. 4(B)) calculated by the PID control unit 14D becomes less than the threshold value TH2 (state at time t22), the gain setting unit 14E repeatedly performs the process of subtracting the derivative gain reduction correction quantity from the current value of the derivative gain Kd (see FIG. 4(A)), thereby reducing the derivative gain Kd from the value greater than "16" to "8."

As a result, in the example shown in FIG. 4, it is possible to inhibit a large change in the instruction value STR (see FIG. 4(B)) during the period after the time t22.

The present inventors and the like have confirmed through their research that, as shown in FIG. 4, by performing the control by the heading control device 14 of the marine vessel 1 of the first embodiment, it is possible to inhibit a large change in the instruction value STR (see FIG. 4(B)).

That is, present the inventors and the like have found that, by performing the process of subtracting the derivative gain reduction correction quantity from the current value of the derivative gain Kd (see FIG. 4(A)), it is possible to inhibit a large change in the instruction value STR (see FIG. 4(B)) calculated by the PID control unit 14D.

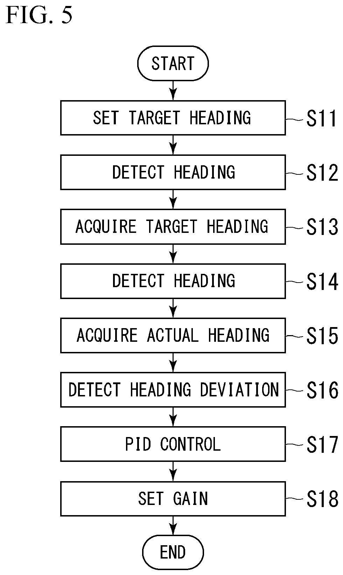

FIG. 5 is a flowchart showing an example of processing executed in the marine vessel 1 of the first embodiment.

In the example shown in FIG. 5, the target heading setting unit 11C sets the target heading of the marine vessel 1 in step S11.

Also, in step S12, the heading detection unit 13 detects the actual heading of the marine vessel 1 at the timing when the target heading is set in step S11.

Next, in step S13, the target heading acquisition unit 14A acquires the actual heading detected in step S12 as the target heading of the marine vessel 1.

Also, in step S14, the heading detection unit 13 detects the actual heading of the marine vessel 1.

Next, in step S15, the actual heading acquisition unit 14B acquires the actual heading of the marine vessel 1 detected in step S14 as the actual heading of the marine vessel 1 used for the control by the heading control device 14.

Next, in step S16, the heading deviation calculation unit 14C calculates the heading deviation, which is the difference between the target heading acquired in step S13 and the actual heading detected in step S14 (specifically, the actual heading acquired in step S15). Next, in step S17, the PID control unit 14D executes the PID control. Specifically, the PID control unit 14D calculates the instruction value STR for the actuator 12 from the heading deviation calculated in step S16.

Also, in step S18, the gain setting unit 14E sets the proportional gain Kp, the integral gain Ki, and the derivative gain Kd used for the PID control on the basis of the heading deviation calculated in step S16 and the instruction value STR calculated in step S17.

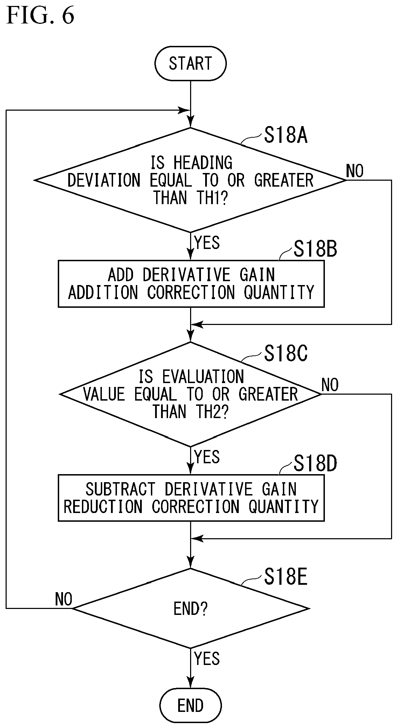

FIG. 6 is a flow chart showing an example of the processing executed in step S18 shown in FIG. 5.

In the example shown in FIG. 6, in step S18A, the gain setting unit 14E determines whether or not the heading deviation calculated in step S16 is equal to or greater than the threshold value TH1. If the heading deviation is greater than or equal to the threshold value TH1, the process proceeds to step S18B, and if the heading deviation is less than the threshold value TH1, the process proceeds to step S18C.

In step S18B, the gain setting unit 14E adds the derivative gain increase correction quantity to the current value of the derivative gain Kd, and the process proceeds to step S18C.

In step S18C, the evaluation value calculation unit 14E2 calculates the evaluation value $E_t$ of the change quantity in the instruction value STR calculated in step S17. Also, in step S18C, the gain setting unit 14E determines whether or not the evaluation value $E_t$ of the change quantity of the instruction value STR is equal to or greater than the threshold value TH2. If the evaluation value $E_t$ of the change quantity in the instruction value STR is equal to or greater than the threshold value TH2, the process proceeds to step S18D, and if the evaluation value $E_t$ of the change quantity in the instruction value STR is less than the threshold value TH2, the process proceeds to step S18E.

In step S18D, the gain setting unit 14E subtracts the derivative gain reduction correction quantity from the current value of the derivative gain Kd, and the process proceeds to step S18E.

In step S18E, the gain setting unit 14E determines whether or not to end the routine shown in FIG. 6. If NO, the process returns to step S18A, and if YES, the routine shown in FIG. 6 ends.


<Second embodiment>

A second embodiment of the marine vessel, the heading control method, the heading control device, and the program according to the present invention will be described below.

The marine vessel 1 of the second embodiment is configured in the same manner as the marine vessel 1 of the first embodiment described above, except for the points described later. Accordingly, according to the marine vessel 1 of the second embodiment, the same effects as those of the marine vessel 1 of the first embodiment described above can be provided except for the points described later.

As described above, the marine vessel 1 of the first embodiment is a marine vessel such as a PWC.

On the other hand, the marine vessel 1 of the second embodiment is a marine vessel other than PWC. Specifically, in a first example of the marine vessel 1 of the second embodiment, the marine vessel 1 of the second embodiment is a small marine vessel such as the small marine vessel described in Japanese Patent No. 3118475, for example.

In a second example of the marine vessel 1 of the second embodiment, the marine vessel 1 of the second embodiment is, for example, a marine vessel equipped with an outboard motor, such as a marine vessel equipped with an outboard motor described in Japanese Patent No. 6198192, or Japanese Unexamined Patent Application, First Publication No. 2007-22284, or the like.

In a third example of the marine vessel 1 of the second embodiment, the marine vessel of the second embodiment is a marine vessel equipped with an inboard or outboard motor or an inboard engine.

In a fourth example of the marine vessel 1 of the second embodiment, the marine vessel of the second embodiment is a large marine vessel equipped with a side thruster.

As described above, the aspects for carrying out the present invention have been described using the embodiments, but the present invention is not limited to such embodiments at all, and various modifications and substitutions can be made without departing from the gist of the present invention. The configurations described in each embodiment and each example described above may be combined together.

All or some of the functions of each unit provided in the marine vessel 1 according to the above-described embodiments may be realized by recording a program for realizing these functions on a computer-readable recording medium and causing a computer system to read and execute the program recorded on this recording medium. Also, the term "computer system" mentioned here includes an OS and hardware such as peripheral devices.

In addition, the term "computer-readable recording medium" indicates a storage unit including a portable medium such as a flexible disk, a magneto-optical disk, ROM, and CD-ROM, and a hard disk built into a computer system. Further, the term "computer-readable recording medium" may also include a medium that dynamically retains a program for a short period of time such as a communication line for transmitting the program via a network such as the Internet or a communication line such as a telephone line, and in that case, a medium that holds the program for a certain period of time such as a volatile memory inside the computer system serving as a server and client. Moreover, the program may be one for realizing some of the above-described functions, or may be one capable of realizing the above-described functions in combination with programs already recorded in the computer system.

[Reference Signs List]

1 Marine vessel
1A Bow
11 Operation unit
11A Steering unit
11B Throttle operation unit
11C Target heading setting unit
12 Actuator
12A Rudder
12B Thrust generation unit
13 Heading detection unit
14 Heading control device
14A Target heading acquisition unit
14B Actual heading acquisition unit
14C Heading deviation calculation unit
14D PID Control unit
14E Gain setting unit
14E1 Change quantity calculation unit
14E2 Evaluation value calculation unit
Kp Proportional gain
Ki Integral gain
Kd Derivative gain
STR Instruction value

**Claims**

1. A marine vessel comprising:

    an actuator having a rudder;
    a heading detection unit configured to detect an actual heading, which is an actual azimuth of a bow of the marine vessel; and
    a heading control device including a target heading acquisition unit, a heading deviation calculation unit, a PID control unit, and a gain setting unit,
    wherein the heading deviation calculation unit calculates a heading deviation, which is a difference between a target heading acquired by the target heading acquisition unit and the actual heading detected by the heading detection unit,
    the PID control unit calculates an instruction value for the actuator through PID control from the heading deviation calculated by the heading deviation calculation unit,
    the gain setting unit sets, out of a proportional gain, an integral gain, and a derivative gain used in the PID control, at least the derivative gain, and
    in a case in which the heading deviation calculated by the heading deviation calculation unit is equal to or greater than a first threshold value,
    the gain setting unit adds a derivative gain addition correction quantity to a current value of the derivative gain.

2. A marine vessel comprising:

an actuator having a rudder;
a heading detection unit configured to detect an actual heading, which is an actual azimuth of a bow of the marine vessel; and
a heading control device including a target heading acquisition unit, a heading deviation calculation unit, a PID control unit, and a gain setting unit,
wherein the heading deviation calculation unit calculates a heading deviation, which is a difference between a target heading acquired by the target heading acquisition unit and the actual heading detected by the heading detection unit,
the PID control unit calculates an instruction value for the actuator through PID control from the heading deviation calculated by the heading deviation calculation unit,
the gain setting unit sets, out of a proportional gain, an integral gain, and a derivative gain used for the PID control, at least the derivative gain, and
in a case in which an evaluation value of a change quantity in the instruction value calculated by the PID control unit is equal to or greater than a second threshold value,
the gain setting unit subtracts a derivative gain reduction correction quantity from a current value of the derivative gain.

3. The marine vessel according to claim 2,

wherein the PID control unit calculates the instruction value for the actuator at a predetermined time interval,
the change quantity in the instruction value calculated by the PID control unit is a difference between an instruction value calculated at that time by the PID control unit and an instruction value previously calculated by the PID control unit, and
the evaluation value of the change quantity in the instruction value calculated by the PID control unit is a value corresponding to a value obtained by accumulating the change quantity in the instruction value calculated by the PID control unit from a current time back to a preset time.

4. A heading control method for a marine vessel including an actuator having a rudder, comprising:

a heading detection step of detecting an actual heading, which is an actual azimuth of a bow of the marine vessel;
a target heading acquisition step of acquiring a target heading;
a heading deviation calculation step of calculating a heading deviation, which is a difference between the target heading acquired in the target heading acquisition step and the actual heading detected in the heading detection step;
a PID control step of calculating an instruction value for the actuator through PID control from the heading deviation calculated in the heading deviation calculation step; and
a gain setting step of setting, out of a proportional gain, an integral gain, and a derivative gain used in the PID control step, at least the derivative gain,
wherein, in a case in which the heading deviation calculated in the heading deviation calculation step is equal to or greater than a first threshold value,
a derivative gain addition correction quantity is added to a current value of the derivative gain in the gain setting step.

5. A heading control method for a marine vessel including an actuator having a rudder, comprising:

a heading detection step of detecting an actual heading, which is an actual azimuth of a bow of the marine vessel;
a target heading acquisition step of acquiring a target heading;
a heading deviation calculation step of calculating a heading deviation, which is a difference between the target heading acquired in the target heading acquisition step and the actual heading detected in the heading detection step;
a PID control step of calculating an instruction value for the actuator through PID control from the heading deviation calculated in the heading deviation calculation step; and
a gain setting step of setting, out of a proportional gain, an integral gain, and a derivative gain used in the PID control step, at least the derivative gain,
wherein, in a case in which an evaluation value of a change quantity in the instruction value calculated in the PID control step is equal to or greater than a second threshold value,

a derivative gain reduction correction quantity is subtracted from a current value of the derivative gain in the gain setting step.

6. A heading control device for a marine vessel including an actuator having a rudder, comprising:

a target heading acquisition unit;
a heading deviation calculation unit configured to calculate a heading deviation, which is a difference between a target heading acquired by the target heading acquisition unit and an actual heading;
a PID control unit configured to calculate an instruction value for the actuator through PID control from the heading deviation calculated by the heading deviation calculation unit; and
a gain setting unit configured to set, out of a proportional gain, an integral gain, and a derivative gain used for the PID control, at least the derivative gain,
wherein, in a case in which the heading deviation calculated by the heading deviation calculation unit is equal to or greater than a first threshold value,
the gain setting unit adds a derivative gain addition correction quantity to a current value of the derivative gain.

7. A heading control device for a marine vessel including an actuator having a rudder, comprising:

a target heading acquisition unit;
a heading deviation calculation unit configured to calculate a heading deviation, which is a difference between a target heading acquired by the target heading acquisition unit and an actual heading;
a PID control unit configured to calculate an instruction value for the actuator through PID control from the heading deviation calculated by the heading deviation calculation unit; and
a gain setting unit configured to set, out of a proportional gain, an integral gain, and a derivative gain used for the PID control, at least the derivative gain,
wherein, in a case in which an evaluation value of a change quantity in the instruction value calculated by the PID control unit is equal to or greater than a second threshold value,
the gain setting unit subtracts a derivative gain reduction correction quantity from a current value of the derivative gain.

8. A non-transitory storage medium storing a program for causing a computer mounted in a marine vessel including an actuator having a rudder to execute:

a heading detection step of detecting an actual heading, which is an actual azimuth of a bow of the marine vessel;
a target heading acquisition step of acquiring a target heading;
a heading deviation calculation step of calculating a heading deviation, which is a difference between the target heading acquired in the target heading acquisition step and the actual heading detected in the heading detection step;
a PID control step of calculating an instruction value for the actuator through PID control from the heading deviation calculated in the heading deviation calculation step; and
a gain setting step of setting, out of a proportional gain, an integral gain, and a derivative gain used in the PID control step, at least the derivative gain,
wherein, in a case in which the heading deviation calculated in the heading deviation calculation step is equal to or greater than a first threshold value,
a derivative gain addition correction quantity is added to a current value of the derivative gain in the gain setting step.

9. A non-transitory storage medium storing a program for causing a computer mounted in a marine vessel including an actuator having a rudder to execute:

a heading detection step of detecting an actual heading, which is an actual azimuth of a bow of the marine vessel;
a target heading acquisition step of acquiring a target heading;
a heading deviation calculation step of calculating a heading deviation, which is a difference between the target heading acquired in the target heading acquisition step and the actual heading detected in the heading detection step;
a PID control step of calculating an instruction value for the actuator through PID control from the heading deviation calculated in the heading deviation calculation step; and
a gain setting step of setting, out of a proportional gain, an integral gain, and a derivative gain used in the PID control step, at least the derivative gain,

wherein, in a case in which an evaluation value of a change quantity in the instruction value calculated in the PID control step is equal to or greater than a second threshold value,

a derivative gain reduction correction quantity is subtracted from a current value of the derivative gain in the gain setting step.

FIG. 1

```
┌─────────────────────────────────────────────┐
│              MARINE VESSEL              ~1    │
│  ┌──────────────────────────────────┐        │
│  │         OPERATION UNIT      ~11   │        │
│  │  ┌────────────────────────┐       │        │
│  │  │     STEERING UNIT   ~11A│       │        │
│  │  ├────────────────────────┤       │        │
│  │  │ THROTTLE OPERATION UNIT ~11B    │        │
│  │  ├────────────────────────┤       │        │
│  │  │     TARGET HEADING      │ ~11C  │        │
│  │  │     SETTING UNIT        │       │        │
│  │  └────────────────────────┘       │        │
│  └──────────────────────────────────┘        │
│  ┌──────────────────────────────────┐        │
│  │            ACTUATOR               │        │
│  │  ┌────────────────────────┐       │        │
│  │  │        RUDDER       ~12A│       │        │
│  │  ├────────────────────────┤       │        │
│  │  │  THRUST GENERATION UNIT ~12B    │        │
│  │  └────────────────────────┘       │        │
│  └──────────────────────────────────┘        │
│  ┌──────────────────────────────────┐        │
│  │    HEADING DETECTION UNIT   ~13   │        │
│  └──────────────────────────────────┘        │
│  ┌──────────────────────────────────┐        │
│  │     HEADING CONTROL DEVICE  ~14   │        │
│  │  ┌────────────────────────┐       │        │
│  │  │     TARGET HEADING      │ ~14A  │        │
│  │  │   ACQUISITION UNIT      │       │        │
│  │  ├────────────────────────┤       │        │
│  │  │     ACTUAL HEADING      │ ~14B  │        │
│  │  │   ACQUISITION UNIT      │       │        │
│  │  ├────────────────────────┤       │        │
│  │  │   HEADING DEVIATION     │ ~14C  │        │
│  │  │   CALCULATION UNIT      │       │        │
│  │  ├────────────────────────┤       │        │
│  │  │    PID CONTROL UNIT ~14D │       │        │
│  │  ├────────────────────────┤       │        │
│  │  │   GAIN SETTING UNIT  ~14E│       │        │
│  │  │ ┌──────────────────┐     │      │        │
│  │  │ │ CHANGE QUANTITY  │~14E1│      │        │
│  │  │ │ CALCULATION UNIT │     │      │        │
│  │  │ ├──────────────────┤     │      │        │
│  │  │ │ EVALUATION VALUE │~14E2│      │        │
│  │  │ │ CALCULATION UNIT │     │      │        │
│  │  │ └──────────────────┘     │      │        │
│  │  └────────────────────────┘       │        │
│  └──────────────────────────────────┘        │
└─────────────────────────────────────────────┘
```

FIG. 2

FIG. 3

# FIG. 4

(A)

| PARAMETER | | | |
|---|---|---|---|
| Kp | P | 5 | 5 |
| Ki | I | 0 | 0 |
| Kd | D | ··· 16, 15, 14, 13, ··· | 8 |

(B)

(C)

WHEN D IS TOO LARGE···
CHANGE IN INSTRUCTION VALUE:
LARGE→ "PARAMETER D" DOWN

BY DECREASING D···
CHANGE IN INSTRUCTION VALUE:
SMALL

TH1

TH1

t21      t22

EP 4 239 418 A1

FIG. 5

```
        ┌─────────┐
        │  START  │
        └─────────┘
             │
             ▼
    ┌──────────────────┐
    │ SET TARGET HEADING │────S11
    └──────────────────┘
             │
             ▼
    ┌──────────────────┐
    │  DETECT HEADING  │────S12
    └──────────────────┘
             │
             ▼
    ┌──────────────────────┐
    │ ACQUIRE TARGET HEADING │────S13
    └──────────────────────┘
             │
             ▼
    ┌──────────────────┐
    │  DETECT HEADING  │────S14
    └──────────────────┘
             │
             ▼
    ┌──────────────────────┐
    │ ACQUIRE ACTUAL HEADING │────S15
    └──────────────────────┘
             │
             ▼
    ┌────────────────────────┐
    │ DETECT HEADING DEVIATION │────S16
    └────────────────────────┘
             │
             ▼
    ┌──────────────────┐
    │   PID CONTROL    │────S17
    └──────────────────┘
             │
             ▼
    ┌──────────────────┐
    │     SET GAIN     │────S18
    └──────────────────┘
             │
             ▼
        ┌─────────┐
        │   END   │
        └─────────┘
```

FIG. 6

```
                    ┌─────────┐
                    │  START  │
                    └────┬────┘
                         │
    ┌────────────────────┤
    │                    ▼                    ~S18A
    │              ◇─────────────◇
    │            ╱  IS HEADING    ╲        NO
    │          ◇  DEVIATION EQUAL TO OR GREATER ◇─────┐
    │            ╲    THAN TH1?   ╱                   │
    │              ◇─────┬───────◇                    │
    │                    │YES           ~S18B         │
    │              ┌─────▼─────────────────┐          │
    │              │ ADD DERIVATIVE GAIN   │          │
    │              │ ADDITION CORRECTION QUANTITY │   │
    │              └─────┬─────────────────┘          │
    │                    │◄────────────────────────────┘
    │                    ▼                    ~S18C
    │              ◇─────────────◇
    │            ╱ IS EVALUATION  ╲        NO
    │          ◇  VALUE EQUAL TO OR GREATER ◇─────┐
    │            ╲    THAN TH2?   ╱                │
    │              ◇─────┬───────◇                 │
    │                    │YES           ~S18D      │
    │              ┌─────▼─────────────────┐       │
    │              │ SUBTRACT DERIVATIVE GAIN │    │
    │              │ REDUCTION CORRECTION QUANTITY │ │
    │              └─────┬─────────────────┘       │
    │                    │◄─────────────────────────┘
    │                    ▼                    ~S18E
    │         NO   ◇─────────────◇
    └─────────────◇    END?       ◇
                   ◇─────┬───────◇
                         │YES
                    ┌────▼────┐
                    │   END   │
                    └─────────┘
```

## INTERNATIONAL SEARCH REPORT

| International application No. |
|---|
| **PCT/JP2021/044086** |

| | |
|---|---|
| **A.** | **CLASSIFICATION OF SUBJECT MATTER** |

*G05B 11/36*(2006.01)i; *G05B 13/02*(2006.01)i; *B63B 79/40*(2020.01)i; *B63H 25/04*(2006.01)i; *B63H 25/30*(2006.01)i
FI: B63H25/04 G; B63B79/40; B63H25/04 Z; B63H25/30 C; B63H25/04 D; G05B11/36 G; G05B11/36 503C; G05B13/02 B

According to International Patent Classification (IPC) or to both national classification and IPC

| | |
|---|---|
| **B.** | **FIELDS SEARCHED** |

Minimum documentation searched (classification system followed by classification symbols)

G05B11/36; G05B13/02; B63B79/40; B63H25/04; B63H25/30

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2011-189884 A (FURUNO ELECTRIC CO LTD) 29 September 2011 (2011-09-29) paragraphs [0024]-[0098], fig. 1-5 | 1, 4, 6, 8 |
| A | paragraphs [0024]-[0098], fig. 1-5 | 2-3, 5, 7, 9 |
| A | US 2018/0231980 A1 (BRUNSWICK CORPORATION) 16 August 2018 (2018-08-16) | 1-9 |
| A | US 2019/0339700 A1 (AUTONOMOUS MARINE SYSTEMS, INC.) 07 November 2019 (2019-11-07) | 1-9 |
| A | CN 111367178 A (BEIJING HIGHLANDER DIGITAL TECH CO., LTD.) 03 July 2020 (2020-07-03) | 1-9 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 January 2022** | **25 January 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2021/044086**

| Patent document cited in search report | | | Publication date (day/month/year) | Patent family member(s) | | | Publication date (day/month/year) |
|---|---|---|---|---|---|---|---|
| JP | 2011-189884 | A | 29 September 2011 | (Family: none) | | | |
| US | 2018/0231980 | A1 | 16 August 2018 | EP | 3363729 | A1 | |
| US | 2019/0339700 | A1 | 07 November 2019 | WO | 2019/213435 | A1 | |
| CN | 111367178 | A | 03 July 2020 | (Family: none) | | | |

Form PCT/ISA/210 (patent family annex) (January 2015)

**REFERENCES CITED IN THE DESCRIPTION**

**Patent documents cited in the description**

- JP 2020200968 A
- JP 2008230484 A
- JP 5400506 B
- JP S6347679 B
- JP 5196649 B
- JP 3118475 B
- JP 6198192 B
- JP 2007022284 A